(19) Europäisches Patentamt
European Patent Office
Office européen des brevets

(11) **EP 3 590 078 B1**

(12) **EUROPÄISCHE PATENTSCHRIFT**

(45) Veröffentlichungstag und Bekanntmachung des Hinweises auf die Patenterteilung:
**29.11.2023 Patentblatt 2023/48**

(21) Anmeldenummer: **18703575.3**

(22) Anmeldetag: **05.02.2018**

(51) Internationale Patentklassifikation (IPC):
**G06N 3/063** (2023.01)    **G06N 3/048** (2023.01)
**G06N 3/045** (2023.01)

(52) Gemeinsame Patentklassifikation (CPC):
**G06N 3/063; G06N 3/048;** G06N 3/045

(86) Internationale Anmeldenummer:
**PCT/EP2018/052786**

(87) Internationale Veröffentlichungsnummer:
**WO 2018/158043 (07.09.2018 Gazette 2018/36)**

(54) **NEURONALNETZSYSTEM**

NEURAL NETWORK SYSTEM

SYSTÈME RÉSEAU NEURONAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2017 DE 102017203292**
**25.04.2017 DE 102017206892**

(43) Veröffentlichungstag der Anmeldung:
**08.01.2020 Patentblatt 2020/02**

(73) Patentinhaber: **Robert Bosch GmbH**
**70442 Stuttgart (DE)**

(72) Erfinder: **GUNTORO, Andre**
**71263 Weil der Stadt (DE)**

(56) Entgegenhaltungen:
DE-T2- 69 602 662

• MOONS BERT ET AL: "A 0.3-2.6 TOPS/W precision-scalable processor for realtime large-scale ConvNets", 2016 IEEE SYMPOSIUM ON VLSI CIRCUITS (VLSI-CIRCUITS), IEEE, 15. Juni 2016 (2016-06-15), Seiten 1-2, XP032969303, DOI: 10.1109/VLSIC.2016.7573525 [gefunden am 2016-09-21]

• ALBERICIO JORGE ET AL: "Cnvlutin: Ineffectual-Neuron-Free Deep Neural Network Computing", 2013 21ST INTERNATIONAL CONFERENCE ON PROGRAM COMPREHENSION (ICPC); [INTERNATIONAL SYMPOSIUM ON COMPUTER ARCHITECTURE.(ISCA)], IEEE, US, 18. Juni 2016 (2016-06-18), Seiten 1-13, XP032950644, ISSN: 1063-6897, DOI: 10.1109/ISCA.2016.11 ISBN: 978-0-7695-3174-8 [gefunden am 2016-08-24]

• CHEN YU-HSIN ET AL: "Eyeriss: An Energy-Efficient Reconfigurable Accelerator for Deep Convolutional Neural Networks", IEEE JOURNAL OF SOLID-STATE CIRCUITS, IEEE SERVICE CENTER, PISCATAWAY, NJ, USA, Bd. 52, Nr. 1, 1. Januar 2017 (2017-01-01) , Seiten 127-138, XP011638633, ISSN: 0018-9200, DOI: 10.1109/JSSC.2016.2616357 [gefunden am 2017-01-09]

• HAN SONG ET AL: "EIE: Efficient Inference Engine on Compressed Deep Neural Network", 2013 21ST INTERNATIONAL CONFERENCE ON PROGRAM COMPREHENSION (ICPC); [INTERNATIONAL SYMPOSIUM ON COMPUTER ARCHITECTURE.(ISCA)], IEEE, US, 18. Juni 2016 (2016-06-18), Seiten 243-254, XP032950663, ISSN: 1063-6897, DOI: 10.1109/ISCA.2016.30 ISBN: 978-0-7695-3174-8 [gefunden am 2016-08-24]

• **HUAN YUXIANG ET AL: "A multiplication reduction technique with near-zero approximation for embedded learning in IoT devices", 2016 29TH IEEE INTERNATIONAL SYSTEM-ON-CHIP CONFERENCE (SOCC), IEEE, 6. September 2016 (2016-09-06), Seiten 102-107, XP033086776, DOI: 10.1109/SOCC.2016.7905445 [gefunden am 2017-04-19]**

**Beschreibung**

Die vorliegende Erfindung betrifft ein Neuronalnetzsystem und ein Verfahren zum Berechnen einer Ausgabe eines neuronalen Netzes durch eine Aktivierungsfunktion.

Interferenzphasen eines tiefgehenden Netzes (Deep Learning Networks) umfassen eine Reihe von Schichten. Auf jeder Schicht wird die Ausgabe jedes Neurons durch Akkumulieren der gewichteten Eingaben vorangehender Neuronen berechnet, gefolgt von der Verarbeitung durch eine Aktivierungsfunktion, wie beispielsweise einer Sigmoid-Funktion, einer Tanh-Funktion oder einer ReLU-Funktion (ReLU - Rectified Linear Unit).

Eine ReLU-Aktivierungsfunktion hat in vielen Fällen eine höhere Performanz, insbesondere für Klassifikationsaufgaben. Daher ist die ReLU-Aktivierungsfunktion diejenige Aktivierungsfunktion, die im Deep Learning am verbreitetsten eingesetzt wird. Darüber hinaus ist diese nichtlineare Aktivierungsfunktion diejenige mit dem geringsten Rechenaufwand unter allen anderen nichtlinearen Aktivierungsfunktionen, wie beispielsweise einer Sigmoid-Funktion oder einer Tanh-Funktion.

Durch Anwenden der ReLU-Aktivierungsfunktion werden die Ausgaben einiger Neuronen gleich Null. In einer Mehrschichtiges-Perzeptron-Konfiguration werden die Ausgaben der Neuronen einer vorangehenden Schicht an die Neuronen einer nachfolgenden Schicht propagiert. Daher umfassen die Berechnungen für die jeweiligen Neuronen teilweise Eingabewerte von Null. In der Regel werden diese Eingabewerte von Null als normale Zahlen behandelt und arithmetisch mit dem gegebenen Gewichtungsfaktor multipliziert. Zur Berechnung einer Ausgabe des neuronalen Netzes ist daher eine große Anzahl arithmetischer Multiplikationen auszuführen.

Die Druckschrift DE 44 049 74 C1 betrifft ein Verfahren, das eine angeordnete Hardwareschaltung befähigt, ein neuronales Netz zu realisieren.

Die Druckschrift DE 103 17 384 A1 betrifft ein Verfahren der Computertomographie.

Eine Online-Rekonstruktion von tomographischen Bildern kann auch unter Verwendung eines Lösungsansatzes basierend auf oder ähnlich dem Robbins-Monro-Algorithmus erreicht werden.

Die Druckschrift US 5,926,804 A betrifft ein neuronales Netzwerk und ein Verfahren zum Trainieren des neuronalen Netzwerkes. Das Netzwerk umfasst einen Satz verborgener Knoten mit zugehörigen Gewichten.

Die Druckschrift US 6,064,997 betrifft eine Familie neuer Mehrschicht-Diskretzeit-Controllern neuronaler Netze zur Steuerung eines dynamischen Multieingangs-Multiausgangssystems (MIMO-System).

Die Druckschrift MOONS BERT ET AL: "A 0.3-2.6 TOPS/W precision-scalable processor for realtime large-scale ConvNets", 2016 IEEE SYMPOSIUM ON VLSI CIRCUITS (VLSI-CIRCUITS), IEEE, 15. Juni 2016 (2016-06-15), Seiten 1-2, DOI: 10.1109/VLSIC.2016.7573525, betrifft einen Prozessor für Convolutional Neural Networks und das Auslassen der Multiplikation und Akkumulation bei Operanden die Null sind.

Die Druckschrift ALBERICIO JORGE ET AL: "Cnvlutin: Ineffectual-Neuron-Free Deep Neural Network Computing", 2013 21ST INTERNATIONAL CONFERENCE ON PROGRAM COMPREHENSION (ICPC); [INTERNATIONAL SYMPOSIUM ON COMPUTER ARCHITECTURE.(ISCA)], IEEE, US, 18. Juni 2016 (2016-06-18), Seiten 1-13, ISSN: 1063-6897, DOI: 10.1109/ISCA.2016.11 ISBN:978-0-7695-3174-8, betrifft eine Hardware-Beschleunigung für Neuronale Netze.

Die Druckschrift CHEN YU-HSIN ET AL: "Eyeriss: An Energy-Efficient Reconfigurable Accelerator for Deep Convolutional Neural Networks", IEEE JOURNAL OF SOLID-STATE CIRCUITS, IEEE SERVICE CENTER, PISCATAWAY, NJ, USA, Bd. 52, Nr. 1, 1. Januar 2017 (2017-01-01), Seiten 127-138, ISSN: 0018-9200, DOI: 10.1109/JSSC.2016.2616357, betrifft einen konfigurierbaren Beschleuniger für Deep Convolutional Neural Networks.

Die Druckschrift HAN SONG ET AL: "EIE: Efficient Inference Engine on Compressed Deep Neural Network", 2013 21ST INTERNATIONAL CONFERENCE ON PROGRAM COMPREHENSION (ICPC); [INTERNATIONAL SYMPOSIUM ON COMPUTER ARCHITECTURE.(ISCA)], IEEE, US, 18. Juni 2016 (2016-06-18), Seiten 243-254, ISSN: 1063-6897, DOI: 10.1109/ISCA.2016.30 ISBN: 978-0-7695-3174-8, betrifft eine energieeffiziente Methode, um komprimierte Deep Neural Networks zu betreiben.

Ein erster Aspekt betrifft ein Rechnerimplementertes Verfahren zum Berechnen einer Ausgabe eines neuronalen Netzes gemäß dem Anspruch 5. Dadurch wird der technische Vorteil erreicht, dass sich die Anzahl der arithmetisch auszuführenden Multiplikationen und Additionen bei der Verarbeitung durch das neuronale Netz verringert und sich die Verarbeitungsgeschwindigkeit des neuronalen Netzes erhöht. Zudem wird kein zusätzliches Bit außerhalb des Zweierkomplement-Datenformates verwendet. Das Zweierkomplement-Datenformat kann auf einer Ganzzahldarstellung (Integer) oder Gleitkommazahldarstellung (z.B. Float, Double) beruhen, bei der das Bit mit dem höchsten Stellenwert dazu verwendet wird, anzuzeigen, dass der Wert der Aktivierungsfunktion Null beträgt.

In der Erfindung ist der erste Bitbereich durch lediglich ein einziges Bit gegeben. Dadurch wird beispielsweise der technische Vorteil erreicht, dass das Vorliegen eines Wertes von Null mit minimalem Speicheraufwand angezeigt werden kann. Zudem kann auf einen Komparator mit Null-Logik verzichtet werden, da das Bit bereits das Ergebnis des Komparatorausgangs bereitstellt. Dadurch verringert sich die Komplexität der Logik.

In einer weiteren technisch vorteilhaften Ausführungsform des Verfahrens ist der zweite Bitbereich durch lediglich zwei Bit gegeben. Dadurch wird beispielsweise ebenfalls der technische Vorteil erreicht, dass das Vorliegen eines Wertes von Null und eines Wertes von Eins mit minimalem Speicheraufwand angezeigt werden kann.

In einer weiteren technisch vorteilhaften Ausführungsform des Verfahrens ist in dem zweiten Bitbereich eine vorzeichenlose Festkommazahl oder Gleitkommazahl kodiert ist. Durch die Festkommazahl können folgende Berechnungen auf einfache Weise mit wenigen Rechenschritten ausgeführt werden. Durch die Gleitkommazahl können Werte in einem großen Wertebereich mit einer hohen Genauigkeit wiedergegeben werden.

In einer weiteren technisch vorteilhaften Ausführungsform des Verfahrens ist die Aktivierungsfunktion eine ReLU-Funktion oder eine Sigmoid-Funktion. Dadurch wird beispielsweise ebenfalls der technische Vorteil erreicht, dass besonders geeignete Aktivierungsfunktionen verwendet werden.

Ein zweiter Aspekt betrifft ein Computerprogramm gemäß dem Anspruch 6. Durch das Computerprogramm werden die gleichen technischen Vorteile wie durch Verfahren nach dem ersten Aspekt erreicht.

Ein dritter Aspekt betrifft ein maschinenlesbares Speichermedium gemäß dem Anspruch 7.

Ein vierter Aspekt betrifft ein Neuronalnetzsystem gemäß dem Anspruch 1.

Durch das Neuronalnetzsystem werden die gleichen technischen Vorteile wie durch Verfahren nach dem ersten Aspekt erreicht.

Ausführungsbeispiele der Erfindung sind in den Zeichnungen dargestellt und in der nachfolgenden Beschreibung näher erläutert.

Es zeigen:

Fig. 1    einen prinzipiellen Aufbau neuronaler Netze;

Fig. 2    eine schematische Darstellung einer Verwendung einer Aktivierungsfunktion;

Fig. 3    verschiedene Aktivierungsfunktionen;

Fig. 4    ein Datenformat für die Aktivierungsfunktion;

Fig. 5    ein Blockdiagramm eines Verfahrens zum Berechnen einer Ausgabe eines neuronalen Netzes; und

Fig. 6    ein schematisches Neuronalnetzsystem

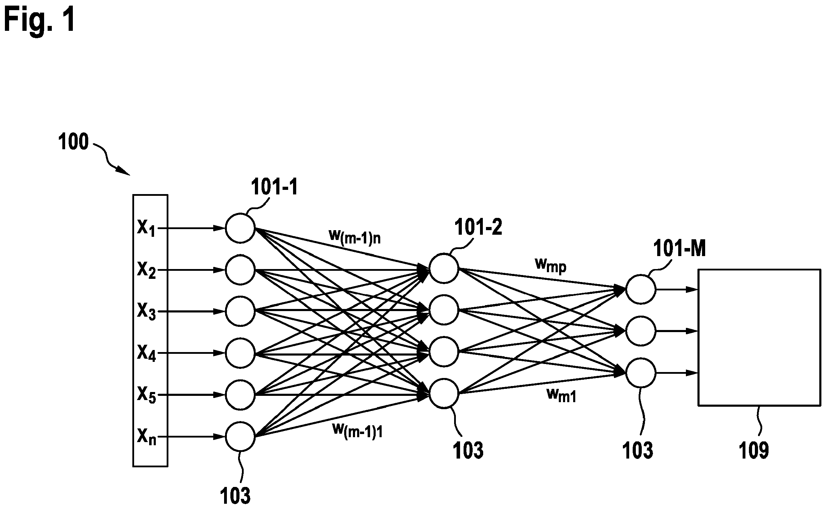

Fig. 1 zeigt einen prinzipiellen Aufbau neuronaler Netze 100. Das neuronale Netz 100 umfasst eine Eingabeschicht 101-1 (Input Layer), ein oder mehrere verarbeitende Schichten 101-2 (Hidden Layer) und eine Ausgabeschicht 101-M (Output Layer). Jede dieser Schichten 101-1, ..., 101-M weist eine bestimmte Anzahl an Neuronen 103 auf.

In die Eingabeschicht 101-1 wird ein Eingangsvektor X als Eingabedaten eingegeben, wie beispielsweise Pixel eines Bildes. Die verarbeitenden Schichten 101-2 weisen Neuronen 103 mit einer Aktivierungsfunktion auf. Die Aktivierungsfunktion gibt an, wie stark das jeweilige Neuron 103 durch dessen Eingabe aktiviert wird und bestimmt die Ausgabe. Die Aktivierungsfunktion ist beispielsweise eine Tangens-Hyperbolicus-Funktion, eine Sigmoid-Funktion oder eine ReLU-Funktion (ReLU - Rectified Linear Unit). Die Ausgabe 109 des neuronalen Netzes 100 bezeichnet die Werte der Ausgabeschicht 101-M, die zum Beispiel durch Auswahl eines normalisierten Maximalwertes zur Klassifikation der Eingabedaten herangezogen werden kann.

Bei der Weiterleitung des Eingangsvektors X an die nachfolgende verarbeitende Schicht 101-2 werden die jeweiligen Komponenten des Eingangsvektors X mit entsprechenden Kantengewichten $w_{(m-1)1}$, ..., $w_{(m-1)n}$ multipliziert. Dies geschieht ebenfalls bei jeder Weiterleitung an eine nachfolgende Schicht 101-M auf der Basis weiterer Gewichte $w_{m1}$, ..., $w_{mp}$. Die jeweilige Eingabe in das jeweilige Neuron 103 wird durch das jeweilige Kantengewicht $w_{mk}$ gewichtet. Anschließend werden alle gewichteten Eingaben akkumuliert, d.h. aufsummiert. Das Ergebnis wird an eine Aktivierungsfunktion übergeben, die die Aktivierung des Neurons 103 berechnet.

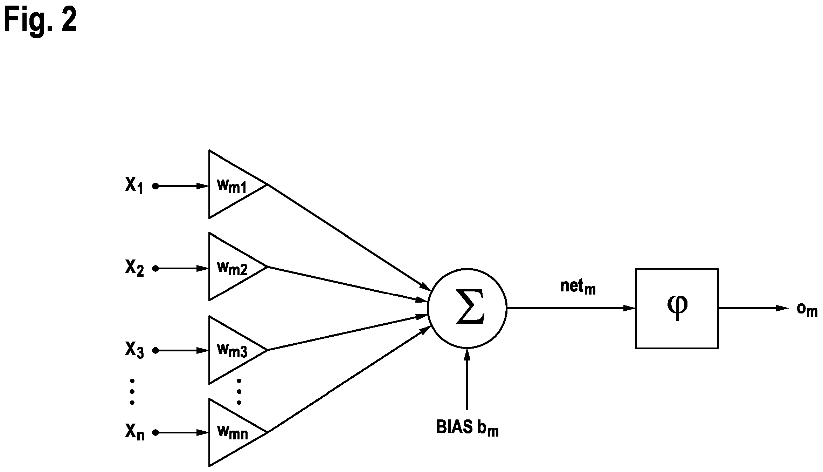

Fig. 2 zeigt eine schematische Darstellung einer Verwendung einer Aktivierungsfunktion in dem neuronalen Netz 100. Die Übertragungsfunktion $\Sigma$ berechnet anhand der Gewichte $w_{m1}$, ..., $w_{mn}$ der Eingaben und des beaufschlagten Bias $b_m$ die Netzeingabe $net_m$ des Neurons 103. Durch die Aktivierungsfunktion $\varphi$ wird auf Basis der Netzeingabe $net_m$ die Aktivierung $o_m$ des Neurons 103 berechnet, die wiederum an die jeweiligen Neuronen 103 der nachfolgenden Schichten 101-M ausgegeben wird.

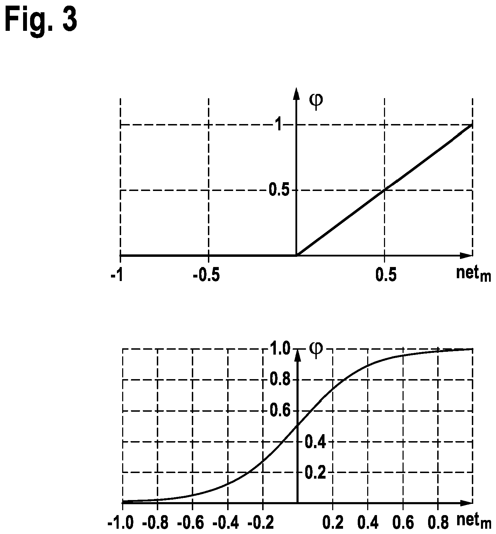

Fig. 3 zeigt mögliche Aktivierungsfunktionen $\varphi$. Die obere Aktivierungsfunktion $\varphi$ ist eine ReLU-Funktion und die untere Aktivierungsfunktion $\varphi$ ist eine Sigmoid-Funktion. Die gezeigten Aktivierungsfunktionen sind in Teilbereichen gleich oder nahe Null. In diesen Teilbereichen ist der Ausgabewert des Neurons 103 ebenfalls Null.

Die Ausgabewerte der Neuronen 103 einer Schicht werden als Eingabewerte für die Neuronen 103 der nächsten Schicht verwendet. Dabei werden für viele Neuronen 103 Multiplikationen mit Null durchgeführt, wenn der Wert der Aktivierungsfunktion Null beträgt. Die Multiplikation mit Null erzeugt arithmetisch den gleichen Rechenaufwand, wie die Multiplikation mit einer anderen Zahl.

Um eine Multiplikation mit Null zu vermeiden, wird ein spezielles Datenformat verwendet, um festzustellen, ob der Wert der Aktivierungsfunktion Null beträgt und somit einer der Multiplikanden Null ist. In diesem Fall kann auf eine rechenaufwändige Durchführung der Multiplikation verzichtet werden. Um den rechentechnischen Aufwand durch die hohe Anzahl von Multiplikationen bei der Berechnung durch das neuronale Netz zu verringern, wird in der Darstellung der Ausgabe der Aktivierungsfunktion $\varphi$ das spezielles Datenformat verwendet.

Das Bit-Muster des Zweierkomplement-Datenformats kann nämlich nicht nur verwendet werden, um den Funktionswert der Aktivierungsfunktion $\varphi$ anzuzeigen, sondern auch um anzuzeigen, ob der Funktionswert der Aktivierungsfunktion $\varphi$ Null ist oder nicht. Zu diesem Zweck wird in einem ersten Bitbereich des Zweierkomplement-Datenformats ein Bit mit höchstem Stellenwert gesetzt, um das Vorliegen eines Wertes von Null anzuzeigen. Zusätzlich ist in dem Zweierkomplement-Datenformat ein zweiter Bitbereich vorgesehen, in dem ein möglicher Funktionswert der Aktivierungsfunktion $\varphi$ abgelegt ist. In diesem Fall ist es nicht erforderlich, den Wert der Aktivierungsfunktion durch eine umfangreiche Prüflogik auszuwerten. Durch die Auswertung eines einzigen Bits aus dem ersten Bitbereich, das das Vorliegen eines Wertes von Null darstellt, kann auf eine weitere Multiplikation und Akkumulation verzichtet werden.

Der technische Vorteil besteht darin, dass kein externes zusätzliches Bit verwendet werden muss, um einen Funktionswert der Aktivierungsfunktion $\varphi$ von Null zu kodieren. Die Daten des Zweierkomplement-Datenformats selbst umfassen daher die Steuerlogikinformation, die angibt, ob eine Multiplikation umgangen werden kann oder nicht.

Erfindungsgemäß wird im Festkommaformat das Zweierkomplement verwendet, um Zahlen im Bitformat darzustellen. Wenn $W$ als Datenbreite verwendet wird, um eine Zahl binär darzustellen, liegt deren Zweierkomplement in einem Bereich von $[-2^{W-1}; +2^{W-1}-1]$.

Einige Beispiele:

| Binärformat | Wert |
|---|---|
| 0000...00 | 0 |
| 0000...01 | +1 |
| 0111...11 | $+(2^{W-1}-1)$ |
| 1111...11 | -1 |
| 1000...00 | $-2^{W-1}$ |

Das Festkommaformat fügt eine zusätzliche Skalierung $2^{-f}$ in die Darstellung ein, bei der f die Anzahl von Bits ist, die verwendet werden, um einen gebrochenen Teil darzustellen.

Die ReLU-Aktivierungsfunktion ist definiert als:

$$f(x) = \begin{cases} x, x > 0 \\ 0, ansonsten \end{cases}$$

In diesem Fall wird eine Vergleichslogik (Comparator-Logik) verwendet, um diese Funktion in einer Hardware zu implementieren. Statt den Funktionswert für $x \leq 0$ in der Ausgabe explizit auf einen Wert von Null zu setzen, wird ein Bitmuster des Zweierkomplement-Datenformats definiert, um das Vorliegen eines Wertes von Null anzuzeigen.

Unter Verwendung einer binären Darstellung im Zweierkomplement-Format und dem Wissen, dass eine Ausgabe der Aktivierungsfunktion $\varphi$ stets positiv oder Null ist, kann das Vorliegen eines Funktionswertes von Null durch das Datenformat anhand eines einzelnen Bits abgeleitet werden.

| MSB | | | | | | LSB |
|---|---|---|---|---|---|---|
| 1 | x | x | x | ... | x | x |

Das Bitmuster des Zweierkomplement-Datenformates weist ein Bit mit einem höchsten Stellenwert (MSB - Most Significant Bit) und ein Bit mit einem niedrigsten Stellenwert (LSB - Least Significant Bit) auf. Das Bit mit einem höchsten Stellenwert wird als erster Bitbereich verwendet, um das Vorliegen eines Funktionswertes von Null anzuzeigen. Die mit x dargestellten Bits sind Don't-Care-Bits (0 oder 1) und haben keinen Einfluss auf die Logikschaltung, die bestimmt, ob eine Multiplikation ausgeführt werden soll oder nicht. Die negativen Zahlen im Zweierkomplement werden bei der ReLU-Aktivierungsausgabe nicht berücksichtigt.

Unter Verwendung der gleichen Menge von Bits wie bei der Darstellung der Funktionswerte im Festkommaformat kann die Berechnungsgeschwindigkeit des neuronalen Netzes 100 gesteigert werden. Daher kann dieses Datenformat besonders effizient verwendet werden, um einen Funktionswert von Null darzustellen, statt zu diesem Zweck ein "000..000"-Bitmuster abzulegen. Der Funktionswert von Null kann auf einfache Weise durch Prüfen des höchstwertigsten Bits festgestellt werden.

Dieses Verfahren kann ebenfalls auf das Gleitkommaformat angewendet werden. In diesem Fall stellt das Bit mit dem höchsten Stellenwert das Vorzeichenbit dar, d.h. "0" als Bit mit dem höchsten Stellenwert bedeutet eine positive Zahl und "1" als Bit mit dem niedrigsten Stellenwert bedeutet einen Funktionswert von Null. Dadurch kann durch Verwenden des gleichen Datenformats (1xxx...xxx) zum Darstellen eines Funktionswertes von Null im Gleitkommazahlformat das gleiche Ziel erreicht werden.

Dieser Ansatz erfordert kein externes zusätzliches Bit, um einen Funktionswert der Aktivierungsfunktion $\varphi$ von Null darzustellen. Das Bit mit dem höchsten Stellwert kann direkt verwendet werden, um eine Multiplikation und schließlich Akkumulation zu deaktivieren. Insofern ist es nicht erforderlich, lange Bitfolgen auszuwerten und diese arithmetisch mit Null zu vergleichen. Dadurch kann ein Leistungsverbrauch und der Umfang einer Vergleichslogik (Comparator-Logic) verringert werden.

Berücksichtigt man, dass eine Sigmoid-Funktion ebenfalls stets positiv ist und einen Funktionswert von Null als Ausgabe für große negative Zahlen liefert, kann dieser Ansatz ebenfalls verwendet werden, um einen Funktionswert von Null in der Bitdarstellung einer Sigmoid-Aktivierungsfunktion darzustellen.

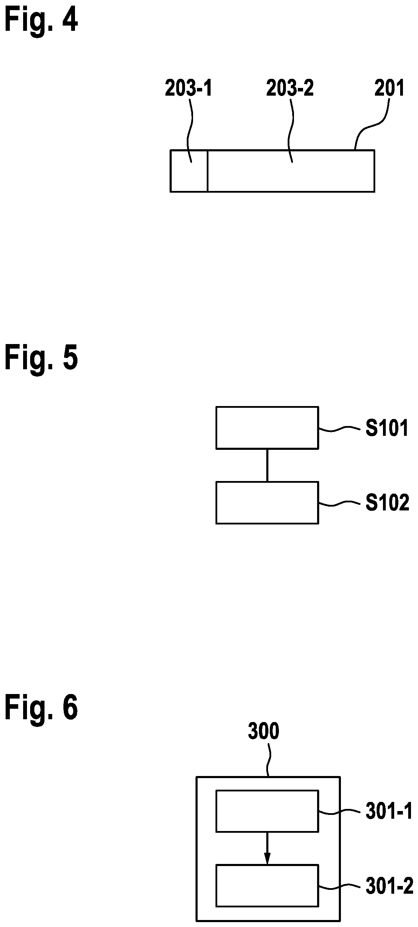

Fig. 4 zeigt ein Datenformat 201 für die Aktivierungsfunktion φ. Das Datenformat 201 weist einen ersten Bitbereich mit einem ersten Bit mit höchstem Stellenwert 203-1 auf, um anzuzeigen, dass der Wert der Aktivierungsfunktion φ Null ist. Daneben weist das Datenformat 201 einen zweiten Bitbereich 203-2 auf, um einen positiven Wert der Aktivierungsfunktion φ zu kodieren. Der erste Bitbereich weist ein ein Steuerbit auf, mittels denen das Vorliegen eines Wertes von Null signalisiert werden kann. Der zweite Bitbereich weist ebenfalls mehrere Bits auf.

Fig. 5 zeigt ein Blockdiagramm eines Verfahrens zum Berechnen der Ausgabe des neuronalen Netzes 100. Das Verfahren umfasst den Schritt S101 eines Berechnens einer Ausgabe eines ersten Neurons 103 mittels der Aktivierungsfunktion φ in dem Zweierkomplement-Datenformat 201 mit dem ersten Bitbereich mit einem ersten Bit mit höchstem Stellenwert 203-1 zum Anzeigen, dass der Wert der Aktivierungsfunktion φ Null ist und dem zweiten Bitbereich 203-2 zum Kodieren eines positiven Wertes der Aktivierungsfunktion φ. In Schritt S102 wird die Ausgabe des zweiten Neurons 103 auf der Basis der Ausgabe des ersten Neurons 103 durch Auslassen einer Akkumulation und Multiplikation der Ausgabe des ersten Neurons 103 berechnet, falls das Zweierkomplement-Datenformat 201 anzeigt, dass der Wert der Aktivierungsfunktion φ Null ist.

Wird anhand des Bitbereich mit einem ersten Bit mit höchstem Stellenwert 203-1 allerdings festgestellt, dass die Aktivierungsfunktion einen positiven Wert aufweist, der in dem Bitbereich 203-2 gespeichert ist, wird eine Multiplikation mit dem jeweiligen Kantengewicht durchgeführt und der gewichtete Wert wird akkumuliert, d.h. aufsummiert.

Das Verfahren kann durch eine Vorrichtung ausgeführt werden, die eingerichtet ist, die Verfahrensschritte auszuführen. Diese Vorrichtung kann beispielsweise in Hardware oder Software oder in einer Mischform implementiert sein, beispielsweise in einer anwendungsspezifischen integrierten Schaltung (ASIC - Application-specific Integrated Circuit) oder einem Computer.

Das Verfahren kann auch durch ein Computerprogramm mit Softwarecodeabschnitten implementiert sein, das in den Speicher eines digitalen Computers geladen werden kann. Der Computer umfasst einen Speicher zum Speichern des Computerprogramms und weiterer Daten, wie beispielsweise der Schichtparameter (z.B. Anzahl der Neuronen, Art der Aktivierungsfunktion), der Kantengewichte, und der Topologie des neuronalen Netzes 100. Ein Prozessor des Computers greift auf das im Speicher gespeicherte Computerprogramm zu und führt das Computerprogramm aus. Allerdings kann das Verfahren auch durch eine geeignete Hardwareschaltung implementiert sein, beispielsweise als Block in einer anwendungsspezifischen integrierten Schaltung. Das Computerprogramm kann auf einem maschinenlesbaren Speichermedium, wie beispielsweise einer Compact Disk oder einem USB-Stick, in digitaler Form gespeichert sein.

Fig. 6 zeigt ein schematisches Neuronalnetzsystem 300. Das Neuronalnetzsystem 300 umfasst ein erstes elektronisches Berechnungsmodul 301-1 zum Berechnen der Ausgabe des ersten Neurons 103 mittels der Aktivierungsfunktion φ in dem Zweierkomplement-Datenformat 201, das den ersten Bitbereich mit einem ersten Bit mit höchstem Stellenwert 203-1 zum Anzeigen, dass der Wert der Aktivierungsfunktion φ Null ist und den zweiten Bitbereich 203-2 zum Kodieren eines positiven Wertes der Aktivierungsfunktion φ umfasst. Weiter umfasst das Neuronalnetzsystem 300 einem zweites Berechnungsmodul 301-1 zum Berechnen der Ausgabe des zweiten Neurons 103 auf der Basis der Ausgabe des ersten Neurons 103 durch Auslassen einer Multiplikation und Akkumulation der Ausgabe des ersten Neurons 103, falls das Zweierkomplement-Datenformat 201 anzeigt, dass der Wert der Aktivierungsfunktion φ Null ist.

Die Berechnungsmodule 301-1 und 301-2 sind beispielsweise durch eine festverdrahtete elektronische Schaltung gebildet, die angepasst ist, die jeweiligen Ausgaben zu berechnen. Die Berechnungsmodule 301-1 und 301-2 können jedoch auch durch einen Computer mit einem Prozessor und einen digitalen Datenspeicher gebildet sein, der ein entsprechendes Computerprogramm umfasst. Der digitale Datenspeicher dient zum Aufnehmen der jeweiligen Werte und des Computerprogramms. Der Prozessor dient zum Verarbeiten der jeweiligen Werte und zum Abarbeiten des Computerprogramms.

Das Neuronalnetzsystem 300 und das Verfahren können beispielsweise in einem Kraftfahrzeug zum Ermöglichen eines autonomen Fahrens eingesetzt werden, wobei mittels Sensoren Sensorwerte erfasst und dem Neuronalnetzsystem 300 zugeführt werden, eine Ausgabe des Neuronalnetzsystem 300 abhängig von den Sensorwerten mit den zuvor beschriebenen Schritten ermittelt wird und das Fahrzeug dann abhängig von der Ausgabe des Neuronalnetzsystem 300 angesteuert wird. Beispielsweise kann das Neuronalnetzsystem und das Verfahren bei einer Erkennung von Verkehrszeichen, Fußgängern oder Freiräumen verwendet werden. Zudem ist es möglich, das Neuronalnetzsystem und das Verfahren beim Vernetzen von Elektrowerkzeugen zu verwenden, so dass komplexe Verarbeitungs- und Steueraufgaben durchgeführt werden können, wie beispielsweise die Anzeige eines Batteriestatus der Elektrowerkzeuge auf einem Tablet-PC.

Das Neuronalnetzsystem und das Verfahren können im Allgemeinen jedoch auch in anderen technischen Bereichen eingesetzt werden, wie beispielsweise in einer elektronischen Steuerung eines Antriebsstrangs oder in einem Diesel-System eines Kraftfahrzeugs, einer Chassis-Steuerung eines Kraftfahrzeuges, einer elektronischen Steuerung von Fahrzeugantrieben, in einem Fahrassistenzsystem, in einem Lenksystem, in einem Multimediasystem in einem Kraftfahrzeug, in Batteriesystemen, in Haushaltsgeräten oder in Sicherheitssystemen für Gebäude. Ebenfalls ist es möglich, das neuronale Netzsystem in industriellen Fertigungsanlagen zu verwenden, wie beispielsweise Verpackungsanlagen. Im Allgemeinen ist das Verfahren auch für neuronale Netze mit jedem anderen Zweck geeignet.

Der Schutzbereich der vorliegenden Erfindung ist durch die Ansprüche gegeben und wird durch die in der Beschreibung erläuterten oder den Figuren gezeigten Merkmale nicht beschränkt.

**Patentansprüche**

1. Neuronalnetzsystem (300), mit

   - einem ersten elektronischen Berechnungsmodul (301-1) zum Berechnen einer Ausgabe eines ersten Neurons (103) mittels einer Aktivierungsfunktion ($\varphi$) in einem binären Datenformat (201) in Zweierkomplement-Format mit einem ersten Bitbereich (203-1) mit einem Bit mit höchsten Stellenwert zum Anzeigen, dass der Wert der Aktivierungsfunktion ($\varphi$) Null ist, und einem zweiten Bitbereich (203-2) zum Kodieren eines positiven Wertes der Aktivierungsfunktion ($\varphi$); und
   - einem zweiten elektronischen Berechnungsmodul (301-2) zum Berechnen der Ausgabe eines zweiten Neurons (103) auf der Basis der Ausgabe des ersten Neurons (103) durch Auslassen einer Multiplikation und Akkumulation der Ausgabe des ersten Neurons (103), falls das Datenformat (201) anzeigt, dass der Wert der Aktivierungsfunktion ($\varphi$) Null ist.

2. Neuronalnetzsystem (300) nach Anspruch 1, wobei der zweite Bitbereich (203-1) durch lediglich zwei Bit gegeben ist.

3. Neuronalnetzsystem (300) nach einem der vorangehenden Ansprüche, wobei in dem zweiten Bitbereich (203-2) eine vorzeichenlose Festkommazahl oder Gleitkommazahl kodiert ist.

4. Neuronalnetzsystem (300) nach einem der vorangehenden Ansprüche, wobei die Aktivierungsfunktion ($\varphi$) eine ReLU-Funktion oder eine Sigmoid-Funktion ist.

5. Rechnerimplementiertes Verfahren zum Berechnen einer Ausgabe eines neuronalen Netzes (100), mit den Schritten:

   - Berechnen (S101) einer Ausgabe eines ersten Neurons (103) mittels einer Aktivierungsfunktion ($\varphi$) in einem binären Datenformat (201) in Zweierkomplement-Format mit einem ersten Bitbereich (203-1) mit einem Bit mit höchstem Stellenwert zum Anzeigen, dass der Wert der Aktivierungsfunktion ($\varphi$) Null ist; und
   - Berechnen (S102) der Ausgabe eines zweiten Neurons (103) auf der Basis der Ausgabe des ersten Neurons (103) durch Auslassen einer Multiplikation und Akkumulation der Ausgabe des ersten Neurons (103), falls das Datenformat (201) anzeigt, dass der Wert der Aktivierungsfunktion ($\varphi$) Null ist.

6. Computerprogramm, das in den Speicher eines digitalen Computers geladen werden kann und das Softwarecodeabschnitte umfasst, mit denen das Verfahren nach Anspruch 5 ausgeführt wird, wenn das Computerprogramm auf dem Computer läuft.

7. Maschinenlesbares Speichermedium, auf dem das Computerprogramm nach Anspruch 6 gespeichert ist.

**Claims**

1. Neural network system (300), comprising:

   - a first electronic calculation module (301-1) for calculating an output from a first neuron (103) by means of an activation function ($\varphi$) in a binary data format (201) in the two's complement format having a first bit range (203-1) having a most significant bit for indicating that the value of the activation function ($\varphi$) is zero, and a second bit range (203-2) for encoding a positive value of the activation function ($\varphi$); and
   - a second electronic calculation module (301-2) for calculating the output from a second neuron (103) on the basis of the output from the first neuron (103) by omitting a multiplication and accumulation of the output from the first neuron (103) if the data format (201) indicates that the value of the activation function ($\varphi$) is zero.

2. Neural network system (300) according to Claim 1, wherein the second bit range (203-1) is given by just two bits.

3. Neural network system (300) according to either of the preceding claims, wherein an unsigned fixed-point number or floating-point number is encoded in the second bit range (203-2).

4. Neural network system (300) according to any of the preceding claims, wherein the activation function ($\varphi$) is an ReLU function or a sigmoid function.

**5.** Computer-implemented method for calculating an output from a neural network (100), comprising the following steps:

- calculating (S101) an output from a first neuron (103) by means of an activation function (φ) in a binary data format (201) in the two's complement format having a first bit range (203-1) having a most significant bit for indicating that the value of the activation function (φ) is zero; and
- calculating (S102) the output from a second neuron (103) on the basis of the output from the first neuron (103) by omitting a multiplication and accumulation of the output from the first neuron (103) if the data format (201) indicates that the value of the activation function (φ) is zero.

**6.** Computer program which can be loaded into the memory of a digital computer and which comprises software code sections by way of which the method according to Claim 5 is carried out when the computer program runs on the computer.

**7.** Machine-readable storage medium on which the computer program according to Claim 6 is stored.

**Revendications**

**1.** Système de réseau neuronal (300), comprenant :

- un premier module de calcul électronique (301-1) destiné à calculer une sortie d'un premier neurone (103) au moyen d'une fonction d'activation (φ) dans un format de données (201) binaire au format de complément à deux, comprenant une première plage de bits (203-1) ayant un bit de poids le plus fort servant à indiquer que la valeur de la fonction d'activation (φ) est nulle, et une deuxième plage de bits (203-2) servant à coder une valeur positive de la fonction d'activation (φ) ; et
- un deuxième module de calcul électronique (301-2) destiné à calculer la sortie d'un deuxième neurone (103) sur la base de la sortie du premier neurone (103) par omission d'une multiplication et cumul de la sortie du premier neurone (103) dans le cas où le format de données (201) indique que la valeur de la fonction d'activation (φ) est nulle.

**2.** Système de réseau neuronal (300) selon la revendication 1, la deuxième plage de bits (203-1) étant définie par deux bits seulement.

**3.** Système de réseau neuronal (300) selon l'une des revendications précédentes, un nombre à virgule fixe sans signe ou un nombre à virgule flottante étant codé dans la deuxième plage de bits (203-2).

**4.** Système de réseau neuronal (300) selon l'une des revendications précédentes, la fonction d'activation (φ) étant une fonction ReLU ou une fonction sigmoïde.

**5.** Procédé mis en œuvre par ordinateur pour calculer une sortie d'un réseau neuronal (100), comprenant les étapes suivantes :

- calcul (S101) d'une sortie d'un premier neurone (103) au moyen d'une fonction d'activation (φ) dans un format de données (201) binaire au format de complément à deux, comprenant une première plage de bits (203-1) ayant un bit de poids le plus fort servant à indiquer que la valeur de la fonction d'activation (φ) est nulle ; et
- calcul (S102) de la sortie d'un deuxième neurone (103) sur la base de la sortie du premier neurone (103) par omission d'une multiplication et cumul de la sortie du premier neurone (103) dans le cas où le format de données (201) indique que la valeur de la fonction d'activation (φ) est nulle.

**6.** Programme informatique qui peut être chargé dans la mémoire d'un ordinateur numérique et qui comprend des portions de code logiciel avec lesquelles le procédé selon la revendication 5 est mis en œuvre lorsque le programme informatique est exécuté sur l'ordinateur.

**7.** Support de stockage lisible par machine, sur lequel est stocké le programme informatique selon la revendication 6.

# Fig. 1

Fig. 2

# Fig. 3

# Fig. 4

203-1　　203-2　　201

# Fig. 5

S101

S102

# Fig. 6

300

301-1

301-2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4404974 C1
- DE 10317384 A1
- US 5926804 A
- US 6064997 A

**In der Beschreibung aufgeführte Nicht-Patentliteratur**

- A 0.3-2.6 TOPS/W precision-scalable processor for realtime large-scale ConvNets. **MOONS BERT et al.** 2016 IEEE SYMPOSIUM ON VLSI CIRCUITS (VLSI-CIRCUITS. IEEE, 15. Juni 2016, 1-2
- Cnvlutin: Ineffectual-Neuron-Free Deep Neural Network Computing. **ALBERICIO JORGE et al.** 2013 21ST INTERNATIONAL CONFERENCE ON PROGRAM COMPREHENSION (ICPC); [INTERNATIONAL SYMPOSIUM ON COMPUTER ARCHITECTURE.(ISCA). IEEE, 18. Juni 2016, 1-13
- Eyeriss: An Energy-Efficient Reconfigurable Accelerator for Deep Convolutional Neural Networks. **CHEN YU-HSIN et al.** IEEE JOURNAL OF SOLID-STATE CIRCUITS. IEEE SERVICE CENTER, 01. Januar 2017, vol. 52, 127-138
- EIE: Efficient Inference Engine on Compressed Deep Neural Network. **HAN SONG et al.** 2013 21ST INTERNATIONAL CONFERENCE ON PROGRAM COMPREHENSION (ICPC); [INTERNATIONAL SYMPOSIUM ON COMPUTER ARCHITECTURE.(ISCA). IEEE, 18. Juni 2016, 243-254